# EUROPÄISCHE PATENTANMELDUNG

(11) **EP 4 018 812 A1**
(43) Veröffentlichungstag der Anmeldung: **29.06.2022**
(21) Anmeldenummer: 21213981.0
(22) Anmeldetag: 13.12.2021
(51) Int. Cl.: A01D 43/08, A01D 61/00, A01D 67/00, A01D 34/43, B62D 55/00, A01D 34/00

(54) **VERFAHREN ZUR PFLEGE ODER WIEDERHERSTELLUNG EINER, INSBESONDERE NÄHRSTOFFARMEN, GRÜNLANDFLÄCHE**

(30) Priorität: 22.12.2020 DE 102020134696
(71) Anmelder: Trautner, Jürgen, 72631 Aichtal (DE)
(72) Erfinder: Rall, Sebastian, 92224 Amberg (DE)
(74) Vertreter: Hafner & Kohl PartmbB

(57) **Zusammenfassung**

Flächenpflegefahrzeug (1) zur Pflege oder Wiederherstellung einer, insbesondere nährstoffarmen, Grünlandfläche (2), vorzugsweise einer Magerrasenfläche, umfassend
- eine Schneideeinrichtung (3) zum Abtrennen von, insbesondere gehölzartigen, Bewuchs (4) von der bestehenden oder wiederherzustellenden Grünlandfläche (2) und
- eine Fördereinrichtung (5) zum Fördern von durch die Schneideinrichtung (3) von der bestehenden oder wiederherzustellenden Grünlandfläche (2) abgetrennten Bewuchs (4) in eine flächenpflegefahrzeugseitige Auffangeinrichtung (6).

## Beschreibung

Die Erfindung betrifft ein Verfahren zur Pflege oder Wiederherstellung einer, insbesondere nährstoffarmen, Grünlandfläche, vorzugsweise einer Magerrasenfläche, sowie ein Flächenpflegefahrzeug zur Ausführung des Verfahrens.

Entsprechende Verfahren zur Pflege oder Wiederherstellung derartiger Flächen sind aus dem Stand der Technik dem Grunde nach bekannt. So wird zur Pflege von derartigen Flächen manuell unter Einsatz von Motorsensen oder anderer Handwerkzeuge ein gezielter Rückschnitt bzw. ein Entfernen von für die Zielfläche unerwünschtem Bewuchs ausgeführt. Dies erfolgt insbesondere dann manuell und ohne Einsatz eines wie auch immer gearteten Fahrzeugs, wenn aufgrund der Bodenbeschaffenheit und/oder aufgrund einer Steilhanglage der fahrzeuggestützte Einsatz nicht möglich ist. Insbesondere schwere Fahrzeuge können eine unerwünschte Beeinträchtigung bzw. Veränderung der Oberfläche einer Grünlandfläche, z. B. einer Grasnarbe, hervorrufen. Leichtere Fahrzeuge können ggf. eine ungünstige Gewichtsverteilung und/oder eine nicht ausreichende Schneideinrichtung zum Zurückschneiden des Bewuchses aufweisen.

Der Erfindung liegt die Aufgabe zugrunde, ein Verfahren sowie ein Flächenpflegefahrzeug anzugeben, welches insbesondere im Hinblick auf eine einfache und schnelle sowie kostengünstige Maßnahme die Qualität der Flächenpflege oder Erstpflege bei der Wiederherstellung einer, insbesondere nährstoffarmen, Grünlandfläche, bevorzugt einer Magerrasenfläche, erhöht und dabei einen geringen manuellen Einsatz erfordert.

Die Aufgabe wird durch ein Flächenpflegefahrzeug zur Pflege oder Wiederherstellung einer Grünlandfläche gemäß Anspruch 1 gelöst. Die Aufgabe wird ferner durch ein Verfahren zur Pflege oder Wiederherstellung einer Grünlandfläche gemäß Anspruch 20 gelöst. Die hierzu abhängigen Ansprüche betreffen mögliche Ausführungsformen des Flächenpflegefahrzeugs bzw. des Verfahrens.

Die Erfindung betrifft ein Flächenpflegefahrzeug zur Pflege oder Wiederherstellung einer, insbesondere nährstoffarmen, Grünlandfläche, vorzugsweise einer Magerrasenfläche, umfassend (a) eine Schneideeinrichtung zum Abtrennen von, insbesondere gehölzartigen, Bewuchs von der bestehenden oder zukünftigen bzw. wiederherzustellenden Grünlandfläche und (b) eine Fördereinrichtung zum Fördern von durch die Schneideinrichtung von der bestehenden oder zukünftigen bzw. wiederherzustellenden Grünlandfläche abgetrennten Bewuchs in eine flächenpflegefahrzeugseitige Auffangeinrichtung. Das Flächenpflegefahrzeug kann beispielsweise als bemanntes oder unbemanntes Fahrzeug ausgebildet sein. Die, insbesondere nährstoffarme, Grünlandfläche kann beispielsweise als nährstoffarme Rasenfläche vorliegen oder in eine solche verändert werden oder zu einer solchen wiederhergestellt werden. Bevorzugt kann die Zielfläche als, insbesondere nährstoffarme, Grünlandfläche und/oder als, insbesondere nährstoffarme, Rasenfläche und/oder als, insbesondere nährstoffarme, Magerrasenfläche bzw. Kalkmagerrasenfläche ausgebildet werden bzw. nach der Behandlung vermittels dem Flächenpflegefahrzeug als eine solche vorliegen bzw. vorbereitet sein.

Die zu pflegende oder wiederherzustellende Grünlandfläche kann auch als landwirtschaftliche Flächen bezeichnet werden, auf denen überwiegend Gras und/oder krautige Pflanzen angebaut werden und deren Biomasseaufwuchs durch Beweidung oder Mahd für die Viehwirtschaft oder geringfügig zur Produktion von Energiepflanzen genutzt wird (Grünlandwirtschaft). Es handelt sich in erster Linie um anthropogen geschaffene Ökosysteme, die der ständigen Nutzung oder Pflege bedürfen, um den Aufwuchs der sich ohne gegensteuernde Maßnahmen entwickelnden Vegetation, insbesondere Gehölze bzw. Wald, zu verhindern. Ebenso werden Naturschutzflächen als Grünland bezeichnet, bei denen der Nutzungsanspruch nur sekundär bis überhaupt nicht gegeben ist, die aber darauf abzielen, den Charakter dieser Kulturlandschaftselemente und/oder die daran gebundenen Tier- und Pflanzenarten durch entsprechende Naturschutzmaßnahmen zu erhalten.

Das Grünland kann als Weide, Wiese oder deren Mischformen vorliegen bzw. als solche erhalten oder wiederhergestellt werden. Wird anthropogen entstandenes Grünland in Mitteleuropa nicht länger genutzt, entwickelt es sich im Laufe der Zeit durch natürliche Sukzession wieder zu Gehölzen oder zu Wald. Dies soll durch das Verfahren zur Pflege der Grünlandfläche bzw. unter Einsatz des Flächenpflegefahrzeugs verhindert oder eine entsprechend vollständig oder in Teilen bereits eingetretene Entwicklung rückgängig gemacht werden. Die Grünlandflächen können unterteilt werden in natürliches Grünland, also natürlich entstandenes Grasland (z. B. Grastundren, Steppen, Savannen) und in durch menschliche Tätigkeit hervorgerufene Grünland-Ökosysteme. Folglich kann das agrarische Grünland eine - durch menschliche Einwirkung geschaffene - Sekundärvegetation und damit eine Unterscheidung von Grünland im engeren und im weiteren Sinn darstellen. Dabei können Wiesen, Weiden oder Mähder (Mahdfluren) Grünland im engeren Sinne bilden. Dieses Grünland im engeren Sinne kann auch als Wirtschaftsgrünland oder als Fettwiese bzw. Fettweide bezeichnet werden. Diese Flächen werden in der Regel mindestens zweimal im Jahr gemäht oder abgeweidet. Ohne diese Bewirtschaftung oder Pflege im Klima Mitteleuropas kann diese Form des Grünlandes nicht existieren. Das hierin beschriebene Verfahren sowie das hierin beschriebene Flächenpflegefahrzeug kann auf einfache und wirtschaftliche Weise den Erhalt dieses Grünlands bzw. dessen Wiederherstellung aus vollständig oder in Teilen bereits in Sukzession befindlichen Flächen ermöglichen.

Grünland im weiteren Sinne umfasst neben den oben genannten Flächen noch Magerwiesen und -weiden einschließlich alpiner Rasenflächen, Feuchtwiesen, Trocken- und Halbtrockenrasen, Borstgrasrasen, Zwergstrauchheiden, Pfeifengras-Streuwiesen sowie Kalkmagerrasen und Seggenriede. Für den Erhalt bzw. zur Pflege dieser Flächen oder zu deren Wiederherstellung aus vollständig oder in Teilen bereits in Sukzession befindlichen Flächen kann das hierin beschriebene Verfahren sowie das hierin beschriebene Flächenpflegefahrzeug eine wirtschaftlich attraktive und zugleich wirkungsvolle Lösung darstellen.

Grünland kann auch eine Erosionsschutzfunktion erfüllen, insbesondere durch deren dauerhaft geschlossene Pflanzendecke. Dadurch, dass keine Bearbeitung des Bodens erfolgt, kann sich insbesondere auf Dauergrünland die Ausbildung eines reichhaltigen Bodenlebens ergeben. Damit bietet das Grünland nicht nur einen Erosions- und Grundwasserschutz, sondern auch einen Lebensraum für bestimmte Pflanzen- und Tierarten. Der Erhalt oder die Wiederherstellung dieser Funktionen wird durch das hierin beschriebene Verfahren sowie durch das hierin beschriebene Flächenpflegefahrzeug auf wirtschaftlich vertretbare und effektive Weise ermöglicht.

Die an dem Flächenpflegefahrzeug vorgesehene Schneideinrichtung ist derart eingerichtet, dass diese im bestimmungsgemäßen Gebrauch an dem Flächenpflegefahrzeug ein Abtrennen des, insbesondere gehölzartigen, Bewuchses ausführt. Das Abtrennen kann ein Schneiden und/oder ein Häckseln umfassen bzw. die Schneideinrichtung entsprechende schneidende (z. B. Messervorrichtung) oder häckselnde (z. B. Schredder) Werkzeuge bzw. Schneidmittel umfassen. Alternativ oder zusätzlich kann die Schneideinrichtung eine Schlagleiste umfassen, welche zur Abtrennung des Bewuchses und/oder zur (Vor-)Zerkleinerung von abgetrenntem Bewuchs beiträgt. Mit anderen Worten kann zum Abtrennen und/oder Zerkleinern des Bewuchses durch die Schneideinrichtung als Schneidmittel eine Schneide und/oder ein Mahlwerk zum Einsatz kommen. Folglich kann die hierin beschriebene Schneideinrichtung ein als Schneide und/oder als Mahlwerk ausgebildetes System zum Abtrennen und/oder Zerkleinern des Bewuchses umfassen.

Der zur Abtrennung von der Grünlandfläche oder von einer wieder oder erstmals in, insbesondere nährstoffarmes, Grünland zu entwickelnden Fläche vorgesehene Bewuchs kann beispielsweise gehölzartig ausgebildet sein, insbesondere Gehölz umfassen. Beispielsweise besteht der vermittels der Schneideinrichtung abgetrennte Bewuchs zumindest teilweise aus sukzessierenden Gehölzen und/oder grasige Strukturen und/oder krautigen Strukturen. Es ist möglich, dass mit dem Flächenpflegefahrzeug zumindest abschnittsweise Bestandteile von Bäumen, Sträuchern und/oder Lianen abgetrennt bzw. abgeschnitten werden. Die Schneideinrichtung kann derart an dem Flächenpflegefahrzeug angeordnet sein, dass ein Abtrennen des Bewuchses in einer definierten Höhe über der Oberfläche der Grünlandfläche oder der wieder in Grünland zu entwickelnden Fläche von maximal 50,0 cm, bevorzugt von maximal 25,0 cm, besonders bevorzugt von maximal 8,0 cm, höchst bevorzugt von maximal 5,0 cm, erfolgt. Auch kann eine Abtrennung des Bewuchses in einer Höhe von maximal 3,0 cm vermittels des Flächenpflegefahrzeug erfolgen.

Im Zuge des Einsatzes des Flächenpflegefahrzeug kann es sich als vorteilhaft erweisen, dass wenigstens die Flächenpflege ausgeführt wird, wenn die Bodenfeuchte bzw. die Oberflächenfeuchtigkeit einen definierten Wert nicht überschreitet. Eine bevorzugte Einsatzzeit bildet der Herbst, insbesondere Spätherbst, oder der Sommer, insbesondere Frühsommer und/oder Hochsommer, in diesen Zeiten ist der Anteil der Energie in dem Bewuchs relativ hoch, sodass durch das Abtrennen dieses Bewuchses ein relativ hoher Betrag an Energie aus der Grünlandfläche, insbesondere aus der Magerrasenfläche oder der wiederherzustellenden Grünlandfläche, entfernt werden kann, sodass das Wachstum dieses Bereichs einen Rückschlag erhält und damit das Neuwachstum gedämpft wird und ggf. etwaige Pflegeintervalle vergrößert werden können. Alternativ oder zusätzlich kann die Einsatzzeit zur Ausführung des flächenpflegefahrzeuggestützten Flächenpflegeverfahren beispielsweise auch außerhalb von Herbst und Sommer liegen. Mit anderen Worten wird durch die entsprechende zeitliche Planung des Einsatzes des Flächenpflegefahrzeugs dessen Einsatzhäufigkeit je Flächeneinheit reduziert, da die Neubildung von abzutrennendem Bewuchs reduziert wird. Schließlich kann damit eine nachhaltige Schädigung der oberirdischen Pflanzenteile erreicht werden.

Eine optionale Maßnahme, um die Bewuchsneubildung zu beeinflussen, kann beispielsweise die Anordnung einer Spendereinrichtung in oder an der Schneideinrichtung und/oder in oder an dem Flächenpflegefahrzeug darstellen. Die Spendereinrichtung kann dazu eingesetzt werden unmittelbar oder mittelbar auf die Grünlandfläche, insbesondere auf die Magerrasenfläche, oder auf die wiederherzustellende Grünlandfläche, einen gasförmigen und/oder flüssigen und/oder festen Stoff zu applizieren, der derart auf diese Fläche einwirkt, dass die Bewuchsbildung, insbesondere die Bewuchsneubildung, gezielt beeinflusst wird. Beispielsweise wird vermittels der Spendereinrichtung ein Aerosol (z. B. ein Stickstoff bzw. ein Stickstoffbinder) auf die Grünlandfläche, insbesondere auf die Rasenfläche, aufgebracht und damit die Bewuchsbildung gezielt beeinflusst bzw. eine gezielte Einflussnahme auf die verbliebene Vegetation ausgeübt. Die Spendereinrichtung kann beispielsweise derart angeordnet und/oder ausgerichtet sein, dass der von ihr applizierte Stoff zumindest abschnittsweise, bevorzugt überwiegend, besonders bevorzugt vollständig, auf wenigstens ein, insbesondere auf sämtliche, Schneidmittel, aufgebracht wird. Der auf dem Schneidmittel befindliche Stoff kann während des Schneides bzw. Häckselns direkt auf die Schnittfläche des auf der Grünlandfläche oder auf der als Grünland wiederherzustellenden Fläche verbleibenden Bewuchses einwirken und verfügt damit über eine hohe Wirksamkeit bzgl. der Beeinflussung der gezielt durch das Flächenpflegefahrzeug zu bearbeiteten (abzutrennenden) Pflanzen. Dies führt folglich zu einer Minimierung des eingesetzten Stoffs.

Die Fördereinrichtung dient zumindest zum teilweisen, bevorzugt überwiegenden, besonders bevorzugt vollständigen, Fördern des abgetrennten Bewuchses von dem Ort des Schneidens (der Schneideinrichtung) zu der Auffangeinrichtung. Hierzu kann die Fördereinrichtung eingerichtet sein, den abgetrennten Bewuchs zumindest abschnittsweise tragend in Richtung oder in die Auffangeinrichtung zu verlagern. Alternativ oder zusätzlich kann die Fördereinrichtung eingerichtet sein, zumindest abschnittsweise, bevorzugt überwiegend, besonders bevorzugt vollständig, den abgetrennten Bewuchs durch Einwirkung von aus der Fördereinrichtung stammender, insbesondere kinetischer, Energie auf den abgetrennten Bewuchs, diesem einen Impuls aufzuprägen, welcher zu einer Verlagerung des abgetrennten Bewuchses hin zur Auffangeinrichtung führt. Die Fördereinrichtung ist vorzugweise eine von der Schneideinrichtung beabstandete Einrichtung. Die Fördereinrichtung kann beispielsweise unabhängig von der Schneideinrichtung mit Energie versorgt werden und/oder unabhängig von der Schneideinrichtung auf den durch die Schneideinrichtung abgetrennten Bewuchs einwirken.

Dadurch, dass der abgetrennte Bewuchs in einer Auffangeinrichtung gesammelt wird und vorzugsweise an einem von dem Abtrennbereich des Bewuchses entfernten Ort abgelegt wird, wird es erreicht, dass die Grünlandfläche, insbesondere die Magerrasenfläche, oder die wiederherzustellende Grünlandfläche, von dem Bewuchs befreit wird und damit eine Grundlage der Nährstoffzufuhr, insbesondere die Bildung von natürlichem Humus, entzogen wird. Mit anderen Worten wird eine Nährstoffbildung aus örtlich verfügbaren bzw. aufgewachsenen Pflanzenteilen unterbunden oder zumindest reduziert. Dies kann ein Beitrag zur über einen längeren Zeitraum wirksamen Beibehaltung einer eher nährstoffarmen Zielsituation bzw. -struktur an dem Abtrennbereich des Bewuchses bzw. der bestehenden oder wiederherzustellenden Grünlandfläche leisten. Damit kann auch das Intervall zum erneuten Bewuchsrückschnitt bzw. zur erneuten Abtrennung von Bewuchs vergrößert werden.

Es ist möglich, dass ein sich zumindest abschnittsweise, bevorzugt überwiegend, besonders bevorzugt vollständig, von der Schneideinrichtung zu der Auffangeinrichtung erstreckender Förderkanal zur Förderung des abgetrennten Bewuchses vorgesehen ist. Beispielsweise ist der Förderkanal zumindest abschnittsweise, bevorzugt überwiegend, besonders bevorzugt vollständig, als ein geschlossene Wandungen aufweisender Rohrkanal ausgebildet. Der Förderkanal kann beispielsweise einen in seiner räumlich-körperlichen Gestalt durch Wandungen bzw. Wandungsabschnitte definierten Förderkanalkörper bzw. Rohrkanal umfassen. Der Förderkanalkörper kann ein- oder mehrteilig ausgeführt sein; in einer mehrteiligen Ausführung umfasst der Förderkanalkörper mehrere Förderkanalkörpersegmente, welche unter Ausbildung des Förderkanalkörpers miteinander, insbesondere mediendicht, verbindbar bzw. verbunden sind. Unabhängig von der ein- oder mehrteiligen Ausführung umfasst der Förderkanalkörper einen Förderkanalraum; hierbei handelt es sich typischerweise um ein durch entsprechende Wandungen bzw. Wandungsabschnitte des Förderkanalkörpers begrenztes inneres Förderkörpervolumen. Der Förderkanalkörperraum dient funktionell zumindest abschnittsweise als Förderraum zum Fördern von abgetrenntem Bewuchs von der Schneideinrichtung hin zur Auffangeinrichtung. Schließlich kann der Förderkanalkörper derart ausgebildet sein, dass ein von der Fördereinrichtung und/oder von der Schneideinrichtung erzeugter Über- und/oder Unterdruck möglichst druckverlustarm oder druckverlustfrei an definierten Stellen des Förderkanals vorherrschen. Beispielsweise kann eine von der Schneideinrichtung beabstandet angeordnete Fördereinrichtung einen Unterdruck im zur Schneideinrichtung zugewandten Förderkanalraum erzeugen, welcher bis in die Schneideinrichtung und ggf. über die Schneideinrichtung auf einen unmittelbar über der Schneideinrichtung liegenden Grünlandflächenbereich bzw. Bereich einer wiederherzustellenden Grünlandfläche einwirkt.

Der Förderkanal kann sich beispielsweise zumindest abschnittsweise, bevorzugt überwiegend, besonders bevorzugt vollständig, von der Schneideinrichtung über die Fördereinrichtung zu der Auffangeinrichtung erstrecken. Hierbei kann der Förderkanal überwiegend, bevorzugt vollständig, als geschlossener Kanal ausgebildet sein. Alternativ oder zusätzlich kann der Förderkanal, insbesondere der als Rohrkanal ausgebildete Förderkanal, zumindest abschnittsweise, bevorzugt überwiegend, besonders bevorzugt vollständig, eine (a) konstante oder (b) eine sich verändernde Querschnittskonturform und/oder Querschnittsfläche aufweisen. Hierbei kann der Förderkanal eine zumindest abschnittsweise, bevorzugt überwiegende, besonders bevorzugt vollständige, Verjüngung seiner Querschnittsfläche in Strömungsrichtung aufweisen. Die Veränderung des Querschnitts kann sich vorteilhaft auf die in dem Förderkanal herrschenden Strömungsverhältnisse und damit auf die Förderung des abgetrennten Bewuchses auswirken.

Der Förderkanal kann beispielsweise von einer sich in Fahrtrichtung vor einer Fahrerkabine angeordneten Schneideinrichtung zumindest bis zu einem sich über einer Oberkante der Fahrerkabine und/oder im oberen Bereich der Fahrerkabine liegenden Bereich erstrecken. Damit kann der Förderkanal vor der flächenpflegefahrzeugseitigen Fahrerkabine angeordnet sein und den abgetrennten Bewuchs über die Fahrerkabine hin zur Auffangeinrichtung führen bzw. lenken. Dabei kann sich der Förderkanal beispielsweise zumindest bis in einen über der Fahrerkabine befindlichen Bereich erstrecken. Auch ist es möglich, dass sich der Förderkanal zumindest bis in einen in Fahrtrichtung des Flächenpflegefahrzeugs gesehenen in der hinteren Hälfte der Fahrerkabine liegenden Bereich erstreckt. Der Förderkanal kann sich beispielsweise bis oberhalb des tiefsten Punktes eines Dachhimmels der Fahrerkabine erstrecken, d. h., dass der Förderkanal auch zumindest abschnittsweise in ein Dach der Fahrerkabine integriert sein kann.

Die Auffangeinrichtung kann beispielsweise in Fahrtrichtung gesehen hinter der Fahrerkabine angeordnet oder ausgebildet sein. Die Auffangeinrichtung kann beispielsweise einen Aufnahmebereich umfassen, der sich zumindest abschnittsweise, insbesondere vollständig, in Fahrtrichtung gesehen hinter der Fahrerkabine befindet. Es ist möglich, dass die Auffangeinrichtung einen Leitabschnitt umfasst, der sich zumindest abschnittsweise in den Bereich oberhalb bzw. über der Fahrerkabine erstreckt. Der Leitabschnitt kann beispielsweise im Wesentlichen horizontal ausgerichtet sein. Die Auffangeinrichtung, insbesondere deren Leitabschnitt, kann sich mit einer Austrittsöffnung des Förderkanals in der Projektion auf die Aufstellfläche des Flächenpflegefahrzeugs bzw. von der Draufsicht aus betrachtet überschneiden. Mit anderen Worten kann die Austrittsöffnung des Förderkanals mit dem Leitabschnitt der Auffangeinrichtung derart zusammenwirken, dass der aus der Austrittsöffnung des Förderkanals austretende abgetrennte Bewuchs in das Auffangvolumen gelangt. Der Leitabschnitt kann hierzu Leitflächen umfassen, die derart ausgerichtet sind, dass ein auf diese Leitflächen treffender abgetrennter Bewuchs in Richtung des Aufnahmebereichs der Auffangeinrichtung gelenkt werden.

Es ist möglich, dass die Fördereinrichtung als Strömungserzeugungseinrichtung ausgebildet ist oder eine solche umfasst. Hierbei kann die Strömungserzeugungseinrichtung, insbesondere in einem Förderkanal, eine Förderströmung erzeugen, durch welche zumindest abschnittsweise eine Förderung des durch die Schneideinrichtung abgetrennten Bewuchses in die Auffangeinrichtung des ein Flächenpflegefahrzeug ausführbar ist. Die Strömungserzeugungseinrichtung kann beispielsweise als Kraftmaschine und/oder als Fluidenergiemaschine ausgebildet sein. Hierbei kann der Strömungserzeugungseinrichtung z. B. Energie zum Antreiben eines Rotors zugeführt werden, wobei durch die Rotorbewegung eine Überdruck- und/oder Unterdruckwirkung an Schnittstellen der Strömungserzeugungseinrichtung erzeugbar ist. Durch die Einwirkung des durch die Strömungserzeugungseinrichtung erzeugten Über- und/oder Unterdrucks kann zumindest abschnittsweise, bevorzugt überwiegend, besonders bevorzugt vollständig, der abgetrennte Bewuchs in die Auffangeinrichtung überführt werden. Die vermittels der Strömungserzeugungseinrichtung erzeugte Förderströmung kann dabei eine Gasströmung ausbilden, welche den abgetrennten Bewuchs "mitreißt". Die Strömungserzeugungseinrichtung kann beispielsweise stromab und beabstandet von der Schneideinrichtung angeordnet sein, wobei die durch die Strömungserzeugungseinrichtung erzeugte Förderströmung eine Absaugung von zumindest stromab der Schneideinrichtung befindlichen abgetrennten Bewuchs ermöglicht. Hierzu kann an entsprechenden Stellen eines Förderkanals ein Unterdruck ausgebildet werden. Alternativ kann die Strömungserzeugungseinrichtung derart ausgebildet sein, dass diese einen zumindest abschnittsweise in dem Förderkanal wirksamen Überdruck erzeugt und den abgetrennten Bewuchs zumindest abschnittsweise durch diesen Überdruck fördert. In einer weiteren Ausführungsform kann die Strömungserzeugungseinrichtung derart ausgebildet sein, dass diese in Richtung der Schneideinrichtung einen Unterdruck erzeugt, welcher in die Schneideinrichtung oder durch die Schneideinrichtung auf den Schneidort der Grünlandfläche im Schneidbereich der Schneideinrichtung einwirkt. Damit kann z. B. in der Nähe der Schneideinrichtung lose liegender Bewuchs über den Schneidbereich der Schneideinrichtung abgesaugt werden. Auch kann eine durch die Strömungserzeugungseinrichtung am Schneidbereich der Schneideinrichtung auf die bestehenden oder wiederherzustellende Grünlandfläche einwirkende Saugwirkung bzw. Unterdruck zur Ausrichtung von abzutrennendem Bewuchs eingesetzt werden und sich damit positiv auf die Schneidwirkung der Schneideinrichtung auswirken.

Eine, insbesondere in oder an dem Förderkanal angeordnete oder ausgebildete und, stromab der Schneideinrichtung angeordnete Zerkleinerungseinrichtung kann beispielsweise zur Zerkleinerung des durch die Schneideinrichtung abgetrennten Bewuchses eingesetzt werden. Bevorzugt erfolgt die zerkleinerungseinrichtungsseitige Zerkleinerung bevor der abgetrennte Bewuchs in die Auffangeinrichtung gelangt. Mit anderen Worten ist in einem Förderkanal stromab der Schneideinrichtung eine Zerkleinerungseinrichtung angeordnet. Diese Zerkleinerungseinrichtung hat die Aufgabe, den ihr zugeführten und durch die Schneideinrichtung abgetrennten Bewuchs weiter zu zerkleinern.

Die Schneideinrichtung kann derart ausgebildet sein, dass diese den abgetrennten Bewuchs derart abtrennt und/oder zerkleinert, dass dieser eine maximale Längserstreckung von 400 mm, bevorzugt von 350 mm, besonders bevorzugt von 320 mm, aufweist. Die Schneideinrichtung kann den abgetrennten Bewuchs derart abtrennen bzw. zerkleinern, dass dieser eine maximale Längserstreckung von 160 mm, bevorzugt von 140 mm, besonders bevorzugt von 100 mm, aufweist. Bevorzugt wird durch die Schneideinrichtung der Bewuchs in einer durchschnittlichen oder maximalen Längserstreckung im Bereich von 100 bis 350 mm, bevorzugt von 140 bis 350 mm, erzeugt. Optional kann die Schneideinrichtung den abzutrennenden Bewuchs derart abtrennen bzw. zerkleinern, dass dieser mindestens eine durchschnittliche Längserstreckung von 100 mm, bevorzugt von 140 mm, besonders bevorzugt von 160 mm, aufweist.

Die Zerkleinerungseinrichtung kann eingerichtet sein, dass diese einen von der Schneideinrichtung abgetrennten Bewuchs derart zerkleinert, dass der Bewuchs nach Durchlaufen der Zerkleinerungseinrichtung eine durchschnittliche und/oder maximale Längserstreckung im Bereich von 40 bis 160 mm, bevorzugt von 40 bis 80 mm, aufweist. Beispielsweise ist die Zerkleinerungseinrichtung eingerichtet, den abgetrennten Bewuchs derart zu zerkleinern, dass dieser nach Durchlaufen der Zerkleinerungseinrichtung eine Längserstreckung von maximal 160 mm, bevorzugt 100 mm, besonders bevorzugt 80 mm, höchst bevorzugt maximal 65 mm, weiter bevorzugt 60 mm, aufweist.

Durch die Zerkleinerungseinrichtung wird es ermöglicht, die Schneideinrichtung derart zu betreiben und/oder auszulegen, dass diese während eines wirksamen Abtrennens des Bewuchses eine hohe Geschwindigkeit des Flächenpflegefahrzeugs ermöglicht und zugleich aufgrund des gering gehaltenen Gewichts der Schneideinrichtung eine günstige Gewichtsverteilung des Gesamtflächenpflegefahrzeugs und damit die Einsetzbarkeit des Flächenpflegefahrzeugs insbesondere in Hanglagen ermöglicht.

Es kann beispielsweise eine möglichst leichte Schneideinrichtung, insbesondere Häcksler bzw. Mulchkopf, eingesetzt werden und damit die Steigfähigkeit (d. h. z. B. Steigungen größer 25 %) erreicht werden. Das Gewicht der Schneideinrichtung resultiert zu einem Großteil auf Mittel zur Erfüllung der Abtrennfunktion, sodass das Gewicht der Mittel der Schneideinrichtung, welche eine Transportfunktion bzw. einen Abtransport von abgetrenntem Bewuchs ermöglichen geringgehalten bzw. reduziert ist. D. h., dass durch die separate bzw. von der Schneideinrichtung getrennt ausgebildete Fördereinrichtung ein Anteil, insbesondere ein überwiegender Anteil, der Transportfunktion bzw. der Förderfunktion für den Transport des abgetrennten Bewuchses in die Aufnahmeeinrichtung, ausgeführt wird. Die getrennt von der Schneideinrichtung angeordnete und ausgehend von der Schneideinrichtung in Richtung des Fahrzeughecks, insbesondere des Fahrzeugzentrums, angeordnete Fördereinrichtung, insbesondere als Strömungserzeugungseinrichtung ausgebildete Fördereinrichtung, ermöglicht die Förderung des abgetrennten Bewuchses in die Auffangeinheit bei einem gleichzeitig mehr im Zentrum des Flächenpflegefahrzeugs gelegenen Schwerpunkt. Mit anderen Worten wird die Schneideinrichtung auf die Abtrennfunktion und ein möglichst geringes Gewicht hin optimiert, die Funktion des Abtransports des abgetrennten Bewuchses in die Auffangeinrichtung übernimmt zumindest teilweise, insbesondere überwiegend, die eher zentraler angeordnete Fördereinrichtung, insbesondere die als Strömungserzeugungseinrichtung ausgebildete Fördereinrichtung.

Als Fördereinrichtung kann beispielsweise der Förderkanal sowie die im oder am Förderkanal angeordnete oder ausgebildete Strömungserzeugungseinrichtung verstanden werden, wobei insbesondere ein zumindest abschnittsweise zur Umwelt hin abgedichteter Förderkanal mit der Strömungserzeugungseinrichtung eine Förderströmung in dem Förderkanal erzeugen und führen kann und diese Förderströmung zum Transport des durch die Schneideinrichtung abgetrennten Bewuchses einsetzbar ist.

Durch die weitere Zerkleinerung des Bewuchses durch diese Trennungseinrichtung wird die Dichte des in der Auffangeinrichtung gelangenden abgetrennten Bewuchses erhöht und folglich eine höhere Aufnahmekapazität der Auffangeinrichtung erreicht.

In einer vorteilhaften Ausführungsform kann es vorgesehen sein, dass die Fördereinrichtung und die Zerkleinerungseinrichtung in einer Förder- und Zerkleinerungseinrichtung als eine Baueinheit ausgebildet sind. Mit anderen Worten kann eine Förder- und Zerkleinerungseinrichtung zum Einsatz kommen, welche gleichzeitig einen Förderstrom zur Förderung des durch die Schneideinrichtung abgetrennten Bewuchses und ein weiteres Zerkleinern des abgetrennten Bewuchses während des Durchführens des abgetrennten Bewuchses durch die Förder- und Zerkleinerungseinrichtung ausführt. In einer beispielshaften Ausführungsform kann die Förder- und Zerkleinerungseinrichtung als Schneid- und/oder Hackturbine ausgebildet sein. Mit anderen Worten kann die Zerkleinerungseinrichtung zumindest mit einem Bestandteil, insbesondere vollständig, mit der Fördereinrichtung - also mit dem für die Förderung des abgetrennten Bewuchses in die Auffangeinrichtung ursächlichen Mitteln - zusammengelegt bzw. als eine Einheit ausgebildet sein.

Das Flächenpflegefahrzeug kann beispielsweise ein mit Raupenketten (auch als Raupenband bezeichnet) ausgestattetes Raupenlaufwerk aufweisen. Mit anderen Worten kann das Flächenpflegefahrzeug mit einem Raupenantrieb ausgestattet sein. Beispielsweise ist die wenigstens eine Raupenkette, insbesondere sind sämtliche Raupenketten des Flächenpflegefahrzeugs, zumindest teilweise, bevorzugt überwiegend, aus einem nichtmetallischen Werkstoff ausgebildet, besonders bevorzugt ist die Raupenkette zumindest teilweise, insbesondere überwiegend, aus Kunststoff und/oder Gummi ausgebildet. Die Verwendung von aus Kunststoff und/oder Gummi ausgebildeten Raupenketten reduziert den mechanischen Eingriff auf den Untergrund bzw. die bestehende oder wiederherzustellende Grünlandfläche und ist damit schonender. Beispielsweise kann eine Pistenraupe als Flächenpflegefahrzeug eingesetzt werden, wobei diese Pistenraupe für den Sommerbetrieb modifiziert sein kann. So kann die Pistenraupe bzw. das Flächenpflegefahrzeug Ausstattungsvorrichtung umfassen, welche eine ausreichende Kühlung des Antriebsmotors auch bei Sommertemperaturen ermöglicht.

Das Flächenpflegefahrzeug kann beispielsweise einen spezifischen Bodendruck von 0,098 bis 0,260 kg/cm², bevorzugt von 0,113 bis 0,178 kg/cm², besonders bevorzugt von 0,134 bis 0,160 kg/cm², aufweisen. Alternativ oder zusätzlich kann es vorgesehen sein, dass der spezifische Bodendruck des Flächenpflegefahrzeug maximal 0,280 kg/cm², bevorzugt maximal 0,200 kg/m², besonders bevorzugt maximal 0,180 kg/cm², höchst bevorzugt maximal 0,160 kg/m², beträgt. Hierzu kann das Gesamtgewicht des Flächenpflegefahrzeugs inklusive oder exklusive Anbauteilen (z. B. Schneideinrichtung) und die, insbesondere durch einen Raupenantrieb vergrößerte, Aufstandsfäche eine entsprechende Abstimmung bzw. Anpassung aufweisen. Das Gesamtgewicht des Flächenpflegefahrzeugs, d. h. inkl. an das Flächenpflegefahrzeug montierter Schneideinrichtung und Fördereinrichtung sowie Förderkanal, kann im Bereich von 5000 bis 15000 kg, bevorzugt von 7000 bis 13000 kg, besonders bevorzugt von 9000 bis 11000 kg, liegen. Alternativ oder zusätzlich beträgt das maximale Gesamtgewicht des Flächenpflegefahrzeug (mit oder ohne Anbauteile wie z. B. Schneideinrichtung und/oder Auffangeinrichtung und/oder Förderkanal) 15000 kg, bevorzugt 13000 kg, besonders bevorzugt 11000 kg.

Der Schwerpunkt des unbeladenen Flächenpflegefahrzeugs kann beispielsweise unterhalb von der Mitte der Mittelhochachse des Flächenpflegefahrzeugs liegen. Bevorzugt liegt der Schwerpunkt des unbeladenen Flächenpflegefahrzeug unterhalb eines Drittels der Mittelhochachse des Flächenpflegefahrzeugs. Als Mittelhochachse ist die vertikal verlaufende Achse durch den, insbesondere geometrischen, Mittelpunkt des Flächenpflegefahrzeugs anzusehen. Durch die Auslegung des Fahrzeugs dahingehen, dass dessen Schwerpunkt derart niedrig liegt, kann die für den vorliegenden Einsatzzweck notwendige Geländegängigkeit erreicht werden. Insbesondere wird durch den tiefen und/oder zentralen Schwerpunkt das Bewegen bzw. Manövrieren des Flächenpflegefahrzeugs auch in Hanglagen von größer 25 %, bevorzugt von größer 35 %, ermöglicht.

Die Schneideinrichtung kann beispielsweise derart ausgebildet bzw. eingerichtet sein, dass, insbesondere gehölzartiger, Bewuchs von einem maximalen Durchmesser von 16 cm, bevorzugt von maximal 13 cm, besonders bevorzugt von maximal 10 cm, höchst bevorzugt von maximal 8 cm, von der bestehenden oder wiederherzustellenden Grünlandfläche abtrennbar ist. Der angegebene Durchmesser des Bewuchses meint hierbei einen mittleren oder maximalen Durchmesser eines abzutrennenden Bewuchsbestandteils, z. B. Asts oder Stamms, am Ort des Schnitts. Der mittlere oder maximale Durchmesser kann sich alternativ oder zusätzlich auf den in der Abtrenn- bzw. Schnittebene liegenden Durchmesser beziehen.

In einer optionalen Ausführungsform ist die Schneideinrichtung derart eingerichtet, dass diese Gehölze, insbesondere Hartriegel und/oder Schwarzdorn - auch Schlehdorn genannt-, mit einem Durchmesser von mindestens 2,0 cm, bevorzugt von mindestens 2,5 cm, besonders bevorzugt von mindestens 3,0 cm, trennbar sind.

Alternativ oder zusätzlich kann ist die Schneideinrichtung derart eingerichtet sein, dass diese Gehölze, insbesondere Hartriegel und/oder Schwarzdorn, von einem Durchmesser von nicht mehr 10,0 cm, bevorzugt nicht mehr als 9,0 cm, besonders bevorzugt nicht mehr als 8,5 cm, höchst bevorzugt von nicht mehr als 8,0 cm, weiter bevorzugt von nicht mehr als 7,0 cm, abtrennbar sind. Mit anderen Worten ist die Schneideinrichtung zur Gewichtsreduzierung derart "schwach" ausgelegt, dass die angegebenen Durchmesserwerte der Gehölze als Obergrenze von den durch die Schneideinrichtung zu trennenden bzw. schneidenden Gehölze darstellen. So kann es beispielsweise vorgesehen sein, dass die Schneideinrichtung kein Trennen bzw. kein Schneiden von Gehölzen mit einem Durchmesser von 10,0 cm, bevorzugt von 9,0 cm, besonders bevorzugt von 8,5 cm, höchst bevorzugt von 8,0 cm, weiter bevorzugt von 7,0 cm, ausführen kann, da die Schneidfähigkeit und/oder Leistungsfähigkeit der Schneideinrichtung entsprechend limitiert ist. Die angegebenen Durchmesserangaben des Bewuchses beziehen sich hierbei auf einen mittleren oder einen maximalen Durchmesser eines abzutrennenden Bewuchsbestandteils, z. B. Asts oder Stamms, am Ort des Schnitts. Der mittlere oder maximale Durchmesser kann sich alternativ oder zusätzlich auf den in der Abtrenn- bzw. Schnittebene liegenden Durchmesser beziehen.

Die Schneideinrichtung kann beispielsweise an der Fahrzeugfront oder in Fahrtrichtung vor der Fahrzeugfront des Flächenpflegefahrzeugs angeordnet sein. Beispielsweise ist die Schneideinrichtung unmittelbar an einem Fahrzeugstrukturbauteil des Flächenpflegefahrzeugs oder mittelbar vermittels einer Halterung an dem Flächenpflegefahrzeug befestigt. Die Schneideinrichtung kann sich zumindest im Zustand des bestimmungsgemäßen Gebrauchs des Flächenpflegefahrzeugs an der Fahrzeugfront bzw. in Fahrtrichtung des Flächenpflegefahrzeugs gesehen vor der Fahrzeugfront des Flächenpflegefahrzeugs befinden. Hierbei kann die Schneideinrichtung zumindest temporär zentriert oder versetzt zur Fahrzeugquerachse angeordnet oder ausgebildet sein.

Beispielsweise kann eine Schneideinrichtung eingesetzt werden, die sich in Gebrauchsstellung über wenigstens 50 %, bevorzugt über wenigstens 75 %, besonders bevorzugt über wenigstens 85 %, höchst bevorzugt über wenigstens 100 %, einer Breite, d. h. Länge in Fahrzeugquerrichtung) des Flächenpflegefahrzeugs erstreckt. Mit anderen Worten kann sich ein effektiver Schneidbereich des Flächenpflegefahrzeugs über dessen gesamte Breite oder über einen Teil der gesamten Breite erstrecken. So kann z. B. eine Arbeitsbreite, d. h. effektiver Abtrennbereich senkrecht zur Fahrzeuglängsachse während des Überfahrens der bestehenden oder wiederherzustellenden Grünlandfläche, der Schneideinrichtung 1,00 bis 4,00 m, bevorzugt 1,20 bis 3,00 m, besonders bevorzugt 1,30 bis 2,50 m, höchst bevorzugt 1,60 bis 2,10 m, betragen. So kann die Schneideinrichtung beispielsweise balkenartig ausgebildet sein. Die an dem Flächenpflegefahrzeug befestigte Schneideinrichtung kann beispielsweise in Fahrzeugquerrichtung beweglich gelagert sein. So kann z. B. die Schneideinrichtung in Fahrzeugquerrichtung unterschiedliche Positionen einnehmen.

Wenigstens ein, insbesondere sämtliche, Schneidmittel der Schneideinrichtung kann bzw. können in Gebrauchsstellung maximal 10 cm, bevorzugt maximal 7 cm, besonders bevorzugt maximal 3 cm, Abstand zu einer Aufstellfläche des Flächenpflegefahrzeugs bzw. zu der Oberfläche der bestehenden oder wiederherzustellenden Grünlandfläche aufweisen. Ein derartiger Abstand der Schneidmittel der Schneideinrichtung von dem Boden ermöglicht es, eine von der Fördereinrichtung ausgehende Saugwirkung möglichst weitreichend zum Abtransport bzw. zur Absaugung des abgetrennten Bewuchses einzusetzen. Durch den geringen Abstand werden auch die Strömungsverhältnisse stromab der Schneideinrichtung positiv beeinflusst bzw. eine höhere Sog- bzw. Saugwirkung im Bereich zwischen der Schneideinrichtung und der Fördereinrichtung erzeugt.

Es ist möglich, dass die Schneideinrichtung selbst über deren unmittelbare Befestigung an dem Flächenpflegefahrzeug und/oder eine die Schneideinrichtung am Flächenpflegefahrzeug befestigende Halteeinrichtung derart ausgebildet ist, dass der Abstand des wenigstens einen Schneidmittels zur Aufstellfläche bzw. zur bestehenden oder wiederherzustellenden Grünlandfläche gezielt veränderbar ist oder in einem definierten Abstandsbereich gehalten werden kann. Bevorzug ist die Schneideinrichtung und/oder eine die Schneideinrichtung am Flächenpflegefahrzeug haltende Halteeinrichtung derart ausgebildet, dass ein definierter Abstandsbereich zwischen wenigstens einem Schneidmittel, insbesondere zwischen sämtlichen Schneidmitteln, der Schneideinrichtung und der Aufstellfläche bzw. der bestehenden oder wiederherzustellenden Grünlandfläche gehalten werden kann. Es kann ferner optional vorgesehen sein, dass das Abtrennen des Bewuchses bodennah, insbesondere bodeneben , erfolgt. Als bodennah kann hierbei ein Abtrennen in einem Höhenbereich von maximal 10,00 cm, bevorzugt von maximal 5,0 cm, besonders bevorzugt von maximal 4,0 cm, höchst bevorzugt von maximal 3,0 cm, über der Bodenkante bzw. Bodenoberfläche der Grünlandfläche verstanden werden. Hierbei kann ferner ein Augenmerk darauf gerichtet sein, dass die Bodennarbe zumindest abschnittsweise, bevorzugt überwiegend, besonders bevorzugt gänzlich, nicht maßgeblich beschädigt wird, d. h., dass der abzutrennende Bewuchs möglichst ohne Zerstörung von dessen Wurzelwerk erfolgt bzw. das Wurzelwerk des Bewuchses möglichst nicht herausgezogen wird.

Es ist möglich, dass ein Erfassungsmittel, z. B. ein berührend und/oder berührungslos arbeitender Abstandssensor, den Abstand der Schneideinrichtung, insbesondere den Abstand des Schneidmittels, zur Aufstellfläche bzw. zur bestehenden oder wiederherzustellenden Grünlandfläche überwacht. Bevorzugt kann ein Ausgangssignal des Erfassungsmittels eingesetzt werden, um die Schneideinrichtung, insbesondere um wenigstens ein Schneidmittel, in einen definierten Sollabstand zur Aufstellfläche bzw. zur bestehenden oder wiederherzustellenden Grünlandfläche zu verlagern. Hierzu kann ein Aktuator angesteuert werden, welcher auf die die Halteeinrichtung und/oder die Schneideinrichtung derart einwirkt, dass eine gezielte Veränderung des Abstands wenigstens eines Schneidmittels zur Aufstellfläche bzw. zur bestehenden oder wiederherzustellenden Grünlandfläche ausgeführt wird. Das Erfassungsmittel kann z. B. als berührender und/oder berührungsloser Höhenabnehmer ausgebildet sein. Zum Beispiel erfolgt eine kontinuierliche oder unterbrochene Abtastung der Höhe durch das Mitführen eines "Sensorrads", das zumindest temporär, bevorzugt stetig, in Kontakt mit der bestehenden oder wiederherzustellenden Grünlandflächenoberfläche bzw. der Aufstellfläche steht und den Abstand zwischen der Schneideinrichtung, insbesondere des Schneidkörpers, zu der Oberfläche erfasst und bevorzugt ein hierfür repräsentatives bzw. ein hierzu abhängiges Signal ausgibt. Dieses Signal kann zur Ansteuerung eines Aktors zur Beeinflussung des Abstands der Schneideinrichtung, insbesondere des Schneidkörpers, zur Oberfläche der bestehenden oder wiederherzustellenden Grünlandfläche verwendet werden. Z. B. wird das Signal zur Ansteuerung einer Hydrauliksteuerung verwendet oder das Signal ist in eine Hydrauliksteuerung integriert, um eine gezielte Veränderung der Ausrichtung und/oder Position der Schneideinrichtung, insbesondere wenigstens eines Schneidkörpers, relativ zu dem Flächenpflegefahrzeug auszuführen.

Die die Schneideinrichtung kann beispielsweise zumindest ein rotierendes Schneidmittel aufweisen, wobei das Schneidmittel um eine im Wesentlichen parallel zur Fahrzeugquerachse, d. h. quer zur Fahrzeuglängsachse, verlaufende Rotationsachse rotierbar ist. Alternativ oder zusätzlich ist das Schneidmittel derart angeordnet oder ausgebildet, dass dieses um eine im Wesentlichen parallel zur Aufstellfläche des Flächenpflegefahrzeug verlaufenden Rotationsachse rotiert. Eine im Wesentlichen parallel zur Fahrzeugquerachse und/oder im Wesentlichen parallel zur Aufstellfläche des Flächenpflegefahrzeugs verlaufende Ausrichtung kann hierbei eine Ausrichtung umfassen, welche einen Winkel von maximal 45°, bevorzugt von maximal 30°, besonders bevorzugt von maximal 20°, von maximal 10°, zwischen der Rotationsachse und der Fahrzeugquerachse bzw. der Aufstellfläche des Flächenpflegefahrzeug einschließt. In einer hervorgehobenen optionalen Ausführungsform schließt die Rotationsachse mit der Fahrzeugquerachse und/oder mit der Aufstellfläche einen Winkel von maximal 5° ein. Es kann vorgesehen sein, dass das Schneidmittel in Gebrauchsstellung während der Rotationsbewegung derart rotiert, dass ein beliebiger Punkt des Schneidmittels sich von einem unteren Tiefpunkt bzw. unteren Totpunkt der Rotationsbewegung aus nach vorne in Vorwärtsfahrtrichtung bewegt. Mit anderen Worten rotiert das wenigstens eine Schneidwerkzeug entgegen einer sich bei Vorwärtsfahrt des Flächenpflegefahrzeugs ergebenden Drehrichtung der Raupenkette bzw. eines Rades des Flächenpflegefahrzeugs. Eine derartige Bewegung ermöglicht es einerseits ein hinreichendes trennendes Einwirken auf den abzutrennenden Bewuchs zu erreichen und ferner dem abgetrennten Bewuchs durch die Rotation des Schneidmittels eine kinetische Energie bzw. eine Bewegung in Richtung des Förderkanals und/oder in den Förderkanal hinein aufzuprägen. Folglich kann ein erster von dem abgetrennten Bewuchs zurückzulegender Weg innerhalb des Förderkanals ausgehend von der Schneideinrichtung, insbesondere vermittels der von dem Schneidmittel, auf den abgetrennten Bewuchs eingebrachten Energie zurückgelegt werden.

Das Flächenpflegefahrzeug kann derart eingerichtet sein, dass es eine Steigfähigkeit von größer 25 %, bevorzugt von größer 30 %, besonders bevorzugt von größer 33 %, höchst bevorzugt von größer 35 %, aufweist. Die angegebene Steigfähigkeit gibt die Steigungen an, welche das Flächenpflegefahrzeug aufgrund der Motorleistung und aufgrund etwaiger auf das Flächenpflegefahrzeug wirkender Kippmomente sicher bewältigen kann. Beispielsweise kann die Steigfähigkeit einen Kippwinkel umfassen, welcher den Grenzwinkel (d. h. Neigungswinkel) einer schiefen Ebene angibt, bei dessen Überschreiten ein mit seiner Mittellängsachse rechtwinklig zur Falllinie der schiefen Ebene ausgerichtetes Flächenpflegefahrzeug kippt.

Die Steigfähigkeit kann dadurch beeinflusst sein, dass zumindest das Antriebsaggregat des Flächenpflegefahrzeugs, z. B. der Verbrennungsmotor, für den Betrieb in den angegebenen Steillagen ausgelegt ist. Beispielsweise ist dessen Ölversorgung derart ausgebildet, dass trotz der entsprechenden Steillage eine hinreichende Ölmenge aus einer Ölwanne absaugbar ist. Das Flächenpflegefahrzeug kann alternativ oder zusätzlich derart ausgebildet sein, dass es bei Temperaturen von -40°C bis 70°C, bevorzugt -20°C bis 60°C, einsetzbar ist, insbesondere ist das Flächenpflegefahrzeug mit einem hierfür zureichend wirksamen Kühlkreislauf ausgestattet.

Es kann sich als vorteilhaft erweisen, wenn die Gewichtsverteilung des Flächenpflegefahrzeugs wie folgt aufgeteilt ist bzw. das Flächenpflegefahrzeug eine nachfolgend angegebene Gewichtsverteilung aufweist: vorderes Drittel des Flächenpflegefahrzeugs zu mittleres Drittel zu hinterem Drittel der Gesamtfahrzeuglänge eine Gewichtsverteilung (Anteil des Gesamtgewichts des Flächenpflegefahrzeugs) von 0,3 bis 0,6 zu 0,2 bis 0,6 zu 0,2 zu 0,4 beträgt, bei einem mit den Anbauteilen (z. B. Schneideinrichtung, Förderkanal, Förderungs-und/oder Zerkleinerungseinrichtung) versehenen Flächenpflegefahrzeug. Mit anderen Worten kann für das Flächenpflegefahrzeug eine Gewichtsverteilung des Flächenpflegefahrzeugs an dessen Gesamtgewicht wie folgt ergeben: (a) Anteil vorderen Drittels des Flächenpflegefahrzeug beträgt 0,3 bis 0,6, (b) Anteil des mittleren Drittel des Flächenpflegefahrzeugs beträgt 0,2 bis 0,6, (c) Anteil des hinteren Drittels des Flächenpflegefahrzeugs beträgt 0,2 bis 0,5.

Alternativ oder zusätzlich kann der Schwerpunkt des Flächenpflegefahrzeugs in Fahrtrichtung gesehen hinter der hinteren Hälfte der Fahrerkabine liegen, bevorzugt liegt der Schwerpunkt hinter der Fahrerkabine. Dies kann insbesondere durch die möglichst oberhalb der Fahrerkabine oder dahinter angeordnete Förder-und/oder Zerkleinerungseinrichtung, insbesondere Strömungseinrichtung, erreicht werden.

Die Fördereinrichtung oder eine Zerkleinerungseinrichtung, insbesondere die Strömungserzeugungseinrichtung bzw. eine Förder- und Zerkleinerungseinrichtung, kann beispielsweise im Bereich der vorderen Begrenzung des Flächenpflegefahrzeugs oder in einem Bereich zwischen der vorderen Begrenzung des Flächenpflegefahrzeugs und dem Heck des Flächenpflegefahrzeugs angeordnet sein. Dadurch, dass die Fördereinrichtung und/oder Zerkleinerungseinrichtung einen Anteil, insbesondere einen überwiegenden Anteil, an der Förderfunktion zur Verlagerung des abgetrennten Bewuchses von der Schneideinrichtung zu der Auffangeinrichtung erfüllt, kann durch eine Anordnung der Fördereinrichtung und/oder Zerkleinerungseinrichtung in Richtung des Fahrzeughecks, insbesondere in Richtung der Fahrzeugmitte, der Schwerpunkt des Gesamtfahrzeugs positiv beeinflusst bzw. mittiger gelegt werden. Bevorzugt ist die Fördereinrichtung und/oder die Zerkleinerungseinrichtung, insbesondere die Strömungserzeugungseinrichtung, in einem Bereich zwischen der vorderen Begrenzung des Flächenpflegefahrzeugs und der geometrischen Mitte des Flächenpflegefahrzeugs angeordnet.

Es kann beispielsweise vorgesehen sein, dass die Fördereinrichtung und/oder eine Zerkleinerungseinrichtung, insbesondere die Strömungserzeugungseinrichtung, zumindest abschnittsweise, bevorzugt überwiegend, besonders bevorzugt vollständig, oberhalb des ersten Drittels der Höhe des Flächenpflegefahrzeug angeordnet ist. Weiterführend kann die Fördereinrichtung und/oder eine Zerkleinerungseinrichtung, insbesondere die Strömungserzeugungseinrichtung, oberhalb des zweiten Drittels, bevorzugt oberhalb des dritten Viertels, besonders bevorzugt oberhalb der Oberkante der Fahrerkabine, angeordnet sein. Durch die in das Zentrum oder zum Heck des Flächenpflegefahrzeugs geführten Verlagerung der Förder- und/oder Zerkleinerungseinrichtung kann der Schwerpunkt und die Steigfähigkeit des Flächenpflegefahrzeugs positiv beeinflusst werden.

Auch kann es optional vorgesehen sein, dass die Fördereinrichtung oberhalb der Fahrerkabine des Flächenpflegefahrzeugs angeordnet oder ausgebildet ist. Damit kann die Fördereinrichtung, insbesondere die Strömungserzeugungseinrichtung, in der Draufsicht aus betrachtet eine Schnittfläche mit der Fahrerkabine bilden, insbesondere vollständig in der Fläche der Fahrerkabine enthalten sein.

Es ist möglich, dass die Fördereinrichtung unmittelbar oder über eine Abstützhalterung an oder auf der Fahrerkabine abgestützt ist. Dies reduziert etwaige, durch die Masse und den Betrieb der Fördereinrichtung erzeugte Schwingungen. Auch können beispielsweise Festigkeits- und/oder Steifigkeitsanforderung, insbesondere bzgl. des Erfüllens einer Tragfunktion der Teile des Förderkanals gesenkt werden, da die Fördereinrichtung von der Fahrerkabine direkt oder über eine mit Fahrerkabine verbundene Abstützhalterung getragen wird.

Die Auffangeinrichtung kann beispielsweise zumindest teilweise, bewegbar an dem Flächenpflegefahrzeug verbunden sein. Bevorzugt ist ein Aufnahmebereich zur Aufnahme von abgetrenntem Bewuchs relativ zu dem restlichen Flächenpflegefahrzeug bewegbar gelagert. In einer beispielhaften Ausführungsform ist der Aufnahmebereich relativ zu dem Flächenpflegefahrzeug um eine Schwenk- bzw. Kippachse kippbar. Dieses Verkippen kann zur Entleerung des abgetrennten Bewuchses aus der Aufnahmeeinrichtung verwendet werden. Hierbei kann z. B. eine Kippautomatik eingesetzt werden, welche durch Aktuatoren eine automatisierte oder manuelle Entleerung durch Kippen des Aufnahmebereichs ermöglicht.

Neben dem Flächenpflegefahrzeug zur Pflege oder Wiederherstellung einer Grünlandfläche betrifft die Erfindung auch ein Verfahren zur Pflege oder Wiederherstellung einer Grünlandfläche unter Verwendung eines Flächenpflegefahrzeugs, insbesondere einem hierin beschriebenen Flächenpflegefahrzeugs.

Das Verfahren zur Pflege oder Wiederherstellung einer, insbesondere nährstoffarmen, Grünlandfläche, vorzugsweise einer Magerrasenfläche, umfasst dabei folgende Verfahrensschritte: (a) Abtrennen von, insbesondere gehölzartigen, Bewuchs von der bestehenden oder wiederherzustellenden Grünlandfläche vermittels einer Schneideinrichtung eines Flächenpflegefahrzeug, insbesondere eines Flächenpflegefahrzeugs nach einem der vorhergehenden Ansprüche sowie (b) Fördern von durch die Schneideinrichtung von der bestehenden oder wiederherzustellenden Grünlandfläche abgetrennten, insbesondere gehölzartigen, Bewuchs vermittels einer Fördereinrichtung des Flächenpflegefahrzeugs in ein flächenpflegefahrzeugseitiges Auffangvolumen.

Sämtliche Vorteile, Einzelheiten, Ausführungen und/oder Merkmale des erfindungsgemäßen Flächenpflegefahrzeugs sind auf das erfindungsgemäße Verfahren übertragbar bzw. anzuwenden.

Die Erfindung ist anhand von Ausführungsbeispielen in den Zeichnungen näher erläutert. Dabei zeigt:
- Fig. 1: eine Prinzipdarstellung eines Flächenpflegefahrzeugs in der Seitenansicht gemäß einem Ausführungsbeispiel;
- Fig. 2: eine Prinzipdarstellung eines Flächenpflegefahrzeugs in der Seitenansicht in einer Hanglage gemäß einem Ausführungsbeispiel;
- Fig. 3: eine Prinzipdarstellung eines Flächenpflegefahrzeugs in der Vorderansicht gemäß einem Ausführungsbeispiel.

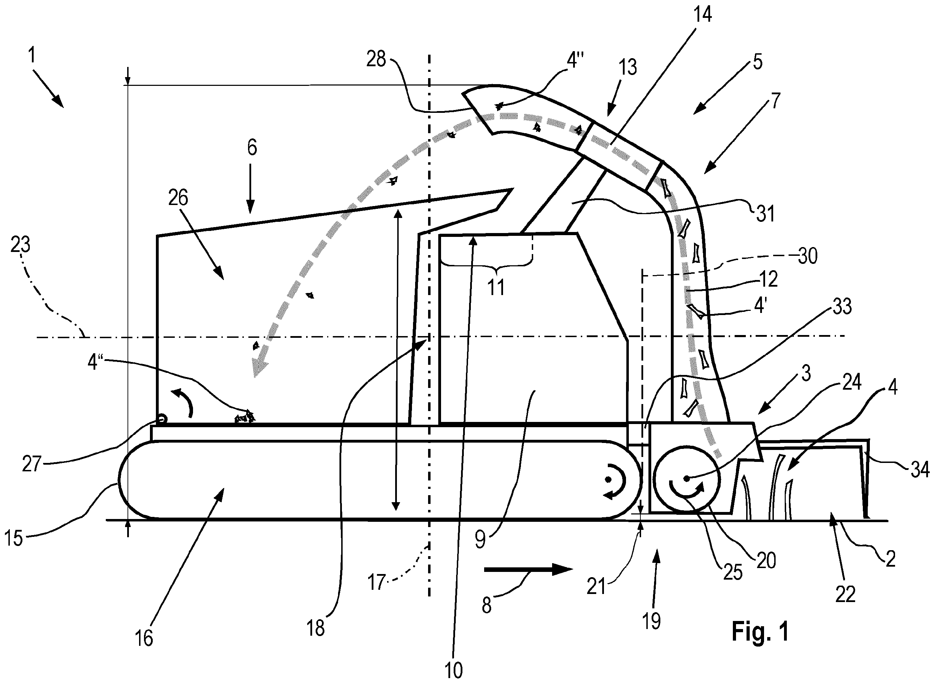

Figur 1 zeigt ein Flächenpflegefahrzeug 1 zur Pflege oder Wiederherstellung einer, insbesondere nährstoffarmen, Grünlandfläche 2, vorzugsweise einer Magerrasenfläche, umfassend (a) eine Schneideeinrichtung 3 zum Abtrennen von, insbesondere gehölzartigen, Bewuchs 4 von der bestehenden oder wiederherzustellenden Grünlandfläche 2 und (b) eine Fördereinrichtung 5 zum Fördern von durch die Schneideinrichtung 3 von der bestehenden oder wiederherzustellenden Grünlandfläche 2 abgetrennten Bewuchs 4 in eine flächenpflegefahrzeugseitige Auffangeinrichtung 6. In der dargestellten Ausführungsform wird der Bewuchs 4 vermittels der Schneideinrichtung 3 von der bestehenden oder wiederherzustellenden Grünlandfläche 2 getrennt bzw. abgeschnitten. Über eine Förderströmung 12 wird der abgeschnittene Bewuchs 4 in einem Förderkanal 7 gefördert und nach Austritt aus dem Förderkanal 7 an einem Austrittsende 28 des Förderkanals 7 in den Aufnahmebereich 26 der Auffangeinrichtung 6. Dort kann der abgetrennte Bewuchs 4 gesammelt werden.

Die Fördereinrichtung 5 kann einen Förderkanal 7 umfassen, der sich zumindest abschnittsweise, insbesondere überwiegend, von der Schneideinrichtung 3 zu der Auffangeinrichtung 6 erstreckt. Der Förderkanal 7 dient zur Förderung des abgetrennten Bewuchses 4. Der Förderkanal 7 ist bevorzugt zumindest abschnittsweise, insbesondere überwiegend, als ein wenigstens eine geschlossene Wandung aufweisender Rohrkanal ausgebildet.

Der Förderkanal 7 kann sich zumindest von einer sich in Fahrtrichtung 8, d. h. in Vorwärtsfahrtrichtung, vor einer Fahrerkabine 9 angeordneten Schneideinrichtung 3 bis zu einem sich über einer Oberkante 10 der Fahrerkabine 9 und/oder im oberen Bereich der Fahrerkabine 9 liegenden Bereich erstreckt, bevorzugt erstreckt sich der Förderkanal 7 zumindest bis in einen über der Fahrerkabine 9 befindlichen Bereich, besonders bevorzugt erstreckt sich der Förderkanal 7 zumindest bis in einen in Fahrtrichtung 8 des Flächenpflegefahrzeugs 1 gesehenen in der hinteren Hälfte 11 der Fahrerkabine 9 liegenden Bereich.

Die Fördereinrichtung 5 kann beispielsweise als Strömungserzeugungseinrichtung ausgebildet sein oder eine solche umfassen. Bevorzugt erzeugt die Strömungserzeugungseinrichtung eine Förderströmung 12, durch welche zumindest abschnittsweise eine Förderung des durch die Schneideinrichtung 3 abgetrennten Bewuchses 4 in die Auffangeinrichtung 6 des Flächenpflegefahrzeugs 1 ausführbar ist.

In dem in den Figuren dargestellten Ausführungsbeispiel ist die als Strömungserzeugungseinrichtung ausgebildete Fördereinrichtung 5 und/oder eine Zerkleinerungseinrichtung 13 und/oder eine Förder- und Zerkleinerungseinrichtung 14 in Längsrichtung des Flächenpflegefahrzeugs 1 in Vorwärtsfahrtrichtung betrachtet hinter der Schneideinrichtung 3 angeordnet.

Es ist möglich, dass eine, insbesondere in oder an dem Förderkanal 7 und, stromab der Schneideinrichtung 3 angeordnete Zerkleinerungseinrichtung 13 zur Zerkleinerung des durch die Schneideinrichtung 3 abgetrennten Bewuchses 4 vorgesehen ist. Bevorzugt erfolgt die zerkleinerungseinrichtungsseitige Zerkleinerung bevor der abgetrennte Bewuchs 4 in die Auffangeinrichtung 6 gelangt. Damit kann ein Zerkleinern des Bewuchses 4 in zwei Schritten erfolgen. Zunächst wird der Bewuchs 4 vermittels der Schneideinrichtung 3 von der bestehenden oder wiederherzustellenden Grünlandfläche 2 getrennt und in große Stücke (Bewuchs 4') gestückelt. Nachdem der in große Stücke gestückelte Bewuchs 4' die Zerkleinerungseinrichtung 13 durchlaufen hat, liegt der Bewuchs 4" in einer verkleinerten Form bzw. in kleineren Stücken vor. Es ist möglich, dass - wie in den Figuren gezeigt - vor und nach der Zerkleinerungseinrichtung 13 ein Förderabschnitt des Förderkanals 7 vorliegt, sodass stromauf der Zerkleinerungseinrichtung 13 und/oder stromab der Zerkleinerungseinrichtung 13m eine Förderung des Bewuchses 4', 4" durch die Förderströmung 12 erfolgt.

Es kann beispielsweise vorgesehen sein, dass die Fördereinrichtung 5 und die Zerkleinerungseinrichtung 13, insbesondere die als Strömungserzeugungseinrichtung ausgebildete Fördereinrichtung 5 und die Zerkleinerungseinrichtung 13, in einer Förder- und Zerkleinerungseinrichtung 14 als eine Baueinheit ausgebildet sind. In der in den Figuren gezeigten Ausführungsform ist die Fördereinrichtung 5 und die Zerkleinerungseinrichtung 13 bzw. die Förder- und Zerkleinerungseinrichtung 14 als eine Einheitausgebildet, wobei diese sowohl einen Förderstrom 12 erzeugt sowie eine Zerkleinerung des diese durchlaufenden abgetrennten Bewuchses 4 ausführt. Beispielsweise ist die Förder- und Zerkleinerungseinrichtung 14 als Schneid- und/oder Hackturbine ausgebildet.

Das in den Figuren dargestellte Flächenpflegefahrzeug 1 weist ein mit wenigstens einer Raupenkette 15 ausgestattetes Raupenlaufwerk 16 auf. Damit weist das Flächenpflegefahrzeug 1 im Grunde einen einer Pistenraupe ähnlichen bzw. angelehnten Aufbau auf. Bevorzugt ist die wenigstens eine Raupenkette 15 zumindest teilweise, insbesondere überwiegend, aus einem nichtmetallischen Werkstoff ausgebildet, so kann die wenigstens eine Raupenkette 15 zumindest teilweise, insbesondere überwiegend, aus Kunststoff und/oder Gummi ausgebildet sein. Eine nichtmetallische Raupenkette 15 bzw. eine aus Kunststoff und/oder Gummi ausgebildete Raupenkette 15 reduziert die mechanische Einwirkung des Flächenpflegefahrzeugs 1 auf die bestehende oder wiederherzustellende Grünlandfläche 2. Vor allem kann durch derartige Raupenketten 15 die Grasnarbe und/oder der bis zu 30 cm unterhalb der Oberfläche der bestehenden oder wiederherzustellenden Grünlandfläche 2 liegende Bodenabschnitt signifikant geschont werden.

Wenn hierin eine Raupenkette 15 (auch Raupenband genannt) erwähnt ist, so kann dies sämtliche Ausgestaltungsvarianten einer Raupenkette 15 umfassen, d. h. z. B., dass die Raupenkette 15 miteinander verbundene Glieder aufweisen kann oder zumindest abschnittsweise eintstückig ausgebildet ist.

Das Flächenpflegefahrzeug 1 kann derart ausgebildet sein, dass es einen spezifischen Bodendruck von 0,098 bis 0,260 kg/cm², bevorzugt von 0,113 bis 0,178 kg/cm², besonders bevorzugt von 0,134 bis 0,160 kg/cm², aufweist.

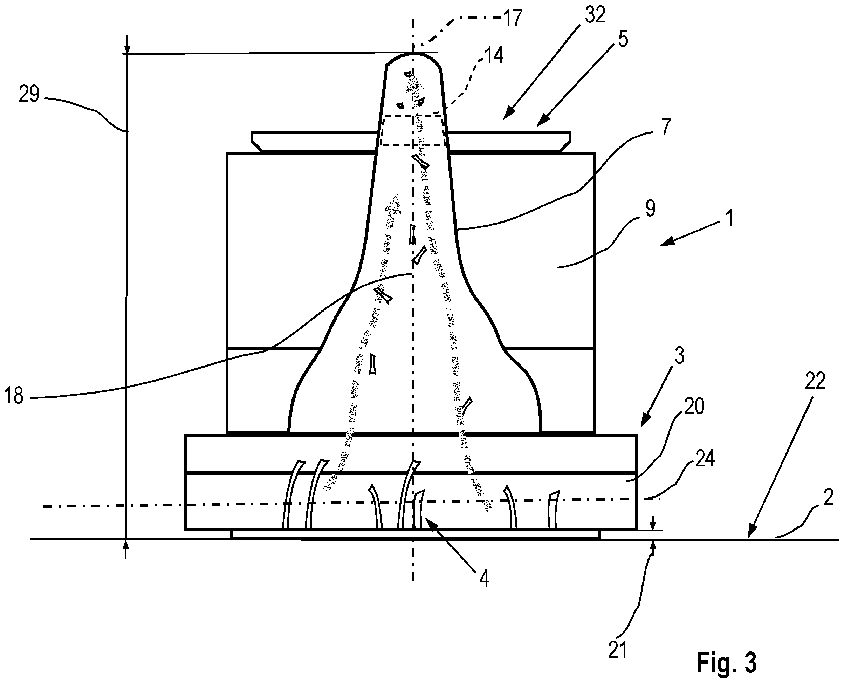

Der Schwerpunkt des unbeladenen Flächenpflegefahrzeugs 1 kann beispielsweise unterhalb von der Mitte 18 der Mittelhochachse 17 des Flächenpflegefahrzeugs 1 liegt. Die Mitte 18 der Mittelhochachse 17 ergibt sich aus der Hälfte der geometrischen Höhe 29 des Flächenpflegefahrzeugs 1. Bevorzugt liegt der Schwerpunkt des unbeladenen Flächenpflegefahrzeug 1 unterhalb eines Drittels der Mittelhochachse 17 der geometrischen Höhe 29 des Flächenpflegefahrzeugs 1. Die geometrische Höhe 29 des Flächenpflegefahrzeugs 1 kann die maximale Höhe des Flächenpflegefahrzeugs 1 mit oder ohne Anbaueinrichtungen (z. B. Schneideinrichtung 3 und/oder Fördereinrichtung 5 und/oder Förderkanal 7) betreffen. In Figur 3 ist die Höhe 29 des Flächenpflegefahrzeugs 1 beispielsweise als die Höhe 29 inklusive der maximalen Höhenerstreckung des montierten Förderkanal 7 angegeben.

Die Schneideinrichtung 3 kann beispielsweise derart ausgebildet sein, dass sich diese dazu eignet, insbesondere gehölzartigen, Bewuchs 4 von einem maximalen Durchmesser von maximal 16 cm, bevorzugt von maximal 13 cm, besonders bevorzugt von maximal 10 cm, höchst bevorzugt von maximal 8 cm; abzutrennen bzw. zu schneiden. Damit ist gemeint, dass die Schneideinrichtung 3 derart eingerichtet ist, dass diese es nicht vermag, jenseits der angegebenen Durchmesserwerte liegenden gehölzartigen Bewuchs 4 zu trennen.

Die Schneideinrichtung 3 kann an einer Fahrzeugfront 19 oder in Fahrtrichtung 8 vor der Fahrzeugfront 19 des Flächenpflegefahrzeugs 1 angeordnet sein. Dies ermöglicht es, dass der abzutrennende Bewuchs 4 nicht durch das Überfahren mit dem Flächenpflegefahrzeug 1 vor dem Abtrennprozess zusammengedrückt wird.

Es kann sich als vorteilhaft erweisen, wenn wenigstens ein, insbesondere sämtliche, Schneidmittel 20 der Schneideinrichtung 3 in Gebrauchsstellung maximal 10 cm, bevorzugt maximal 7 cm, besonders bevorzugt maximal 3 cm, Abstand 21 zu einer Aufstellfläche 22 des Flächenpflegefahrzeugs 1 aufweisen bzw. in einem derartigen Abstandsbereich gehalten werden. Mit anderen Worten beträgt der Abstand 21 zwischen dem Schneidmittel 20 der Schneideinrichtung 3 und der von dem Flächenpflegefahrzeug überfahrenen bestehenden oder wiederherzustellenden Grünlandfläche 2 maximal 10 cm, bevorzugt maximal 7 cm, besonders bevorzugt maximal 3 cm. Hiermit kann z. B. ein bodenebenes Abtrennen des abzutrennenden Bewuchses 4 ermöglicht werden.

Die Schneideinrichtung 3 kann beispielsweise zumindest ein rotierendes Schneidmittel 20 aufweisen, wobei das Schneidmittel 20 um eine im Wesentlichen quer zur Fahrzeuglängsachse 23 verlaufende Rotationsachse 24 rotierbar ist. Hierbei kann es beispielsweise vorgesehen sein, dass das Schneidmittel 20 in Gebrauchsstellung um eine sich von einem unteren Tiefpunkt aus betrachtet nach vorne bzw. in Vorwärtsfahrtrichtung 8 bewegende Rotationsrichtung (s. Pfeil 25) des Flächenpflegefahrzeugs 1 rotiert. Damit rotiert das wenigstens eine Schneidmittel 20 gemäß der Drehrichtung des Pfeils 25 um die Rotationsachse 24.

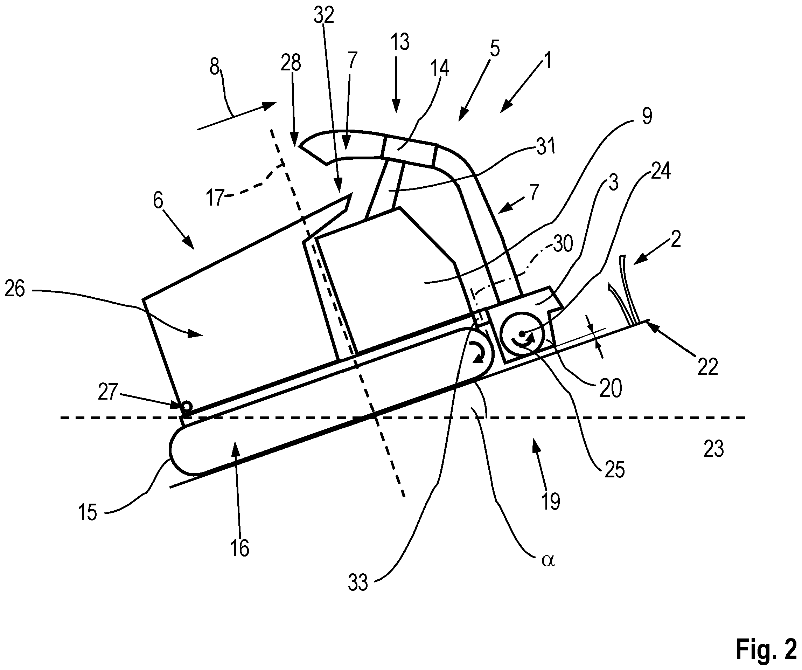

Das Flächenpflegefahrzeug 1 kann derart ausgebildet bzw. eingerichtet sein, dass es eine Steigfähigkeit von größer 25 %, bevorzugt von größer 30 %, besonders bevorzugt von größer 33 %, höchst bevorzugt von größer 35 %, aufweist. Gemäß Figur 2 weist das Flächenpflegefahrzeug 1 eine Steigfähigkeit von z. B. 35 % auf, d. h., dass das Flächenpflegefahrzeug fähig ist eine Rampe mit einem Rampenwinkel α von 19,3° hinaufzufahren.

Eine vorteilhafte Gewichtsverteilung des Flächenpflegefahrzeug kann dadurch gegeben sein, wenn die Gewichtsverteilung des Flächenpflegefahrzeugs 1 wie folgt aufgeteilt ist: (a) Anteil vorderen Drittels des Flächenpflegefahrzeug 1 beträft 0,3 bis 0,6, (b) Anteil des mittleren Drittel des Flächenpflegefahrzeugs 1 beträgt 0,2 bis 0,6, (c) Anteil des hinteren Drittels des Flächenpflegefahrzeugs 1 beträgt 0,2 bis 0,5. Das vordere Drittel des Flächenpflegefahrzeug betrifft hierbei den zur Fahrzeugfront bzw. in Fahrtrichtung 8 weisenden Längenabschnitt der Gesamtlänge (inkl. Anbauteile, wie z. B. Schneideinrichtung 3) des Flächenpflegefahrzeug 1.

Die Fördereinrichtung 5, insbesondere die Strömungserzeugungseinrichtung, kann beispielsweise im Bereich der vorderen Begrenzung 30 des Flächenpflegefahrzeugs 1 oder in einem Bereich zwischen der vorderen Begrenzung 30 des Flächenpflegefahrzeugs 1 und dem Heck des Flächenpflegefahrzeugs 1 angeordnet sein. Damit ist das Gewicht der Fördereinrichtung 5 in Richtung des Zentrums und/oder in Richtung des Hecks des Flächenpflegefahrzeugs 1 verlagert, womit die Steigfähigkeit des Flächenpflegefahrzeug 1 positiv beeinflusst wird. Mit der vorderen Begrenzung des Flächenpflegefahrzeugs 1 kann in diesem Zusammenhang das vordere Ende des Flächenpflegefahrzeugs 1 ohne Anbaueinrichtungen verstanden sein, d. h. z. B. ohne Betrachtung der Schneideinrichtung 3. Es ist möglich, dass die Fördereinrichtung 5, insbesondere die Strömungserzeugungseinrichtung bzw. die Förder- und Zerkleinerungseinrichtung 14, zumindest abschnittsweise, bevorzugt überwiegend, besonders bevorzugt vollständig, hinter der Begrenzung 30 des Flächenpflegefahrzeugs 1 ohne die Schneideinrichtung 3 angeordnet ist.

In einer beispielhaften Ausführungsform kann es vorgesehen sein, dass die Strömungserzeugungseinrichtung und/oder eine Förder- und Zerkleinerungseinrichtung 14 mit einer vorderen Begrenzung 30 des Flächenpflegefahrzeugs 1 schneidend oder - in Vorwärtsfahrtrichtung betrachtet - hinter einer vorderen Begrenzung 30 des Flächenpflegefahrzeugs 1 angeordnet oder ausgebildet ist. Dadurch, dass die Strömungserzeugungseinrichtung und/oder eine Förder- und/oder Zerkleinerungseinrichtung 14 derart zur Fahrzeugmitte angeordnet oder ausgebildet ist, kann eine Frontlastigkeit des Flächenpflegefahrzeugs 1 verhindert oder reduziert werden.

Es ist möglich, dass das die Fördereinrichtung 5, insbesondere die Strömungserzeugungseinrichtung bzw. eine Förder- und Zerkleinerungseinrichtung 14, zumindest abschnittsweise, bevorzugt überwiegend, besonders bevorzugt vollständig, oberhalb des ersten Drittels der Höhe 29 des Flächenpflegefahrzeug angeordnet ist. Weiterführend kann die Fördereinrichtung 5, insbesondere die Strömungserzeugungseinrichtung bzw. eine Förder- und Zerkleinerungseinrichtung 14, oberhalb des zweiten Drittels der Höhe 29 des Flächenpflegefahrzeugs 1, bevorzugt oberhalb des dritten Viertels der Höhe 29 des Flächenpflegefahrzeug 1, besonders bevorzugt oberhalb der Oberkante 10 der Fahrerkabine 9, angeordnet sein.

Die Auffangeinrichtung 6 kann beispielsweise zumindest teilweise bewegbar an dem Flächenpflegefahrzeug 1 verbunden bzw. ausgebildet sein. Bevorzugt ist ein Aufnahmebereich 26 zur Aufnahme von abgetrennten Bewuchses 4', 4" bzw. wenigstens ein den Aufnahmebereich 26 definierender oder sämtliche den Aufnahmebereich 26 definierende Wandungsabschnitte über eine Schwenkachse 27 schwenkbar an dem Flächenpflegefahrzeug 1 gelagert.

Neben dem Flächenpflegefahrzeug 1 betrifft die Erfindung ein Verfahren zur Pflege oder Wiederherstellung einer, insbesondere nährstoffarmen, Grünlandfläche 2, vorzugsweise einer Magerrasenfläche, umfassend die folgenden Verfahrensschritte: (a) Abtrennen von, insbesondere gehölzartigen, Bewuchs 4 von der bestehenden oder wiederherzustellenden Grünlandfläche 2 vermittels einer Schneideinrichtung 3 eines Flächenpflegefahrzeugs 1, insbesondere eines Flächenpflegefahrzeugs 1 nach einem der vorhergehenden Ansprüche, (b) Fördern von durch die Schneideinrichtung 3 von der bestehenden oder wiederherzustellenden Grünlandfläche 2 abgetrennten, insbesondere gehölzartigen, Bewuchs 4 vermittels einer Fördereinrichtung 5 des Flächenpflegefahrzeugs 1 in einen flächenpflegefahrzeugseitiges Aufnahmebereich 26.

Wie insbesondere in Figur 1 ersichtlich ist, kann es vorgesehen sein, dass die Fördereinrichtung 5, insbesondere die Strömungserzeugungseinrichtung bzw. die Förder- und Zerkleinerungseinrichtung 14, und/oder der Förderkanal 7 zumindest abschnittsweise, bevorzugt überwiegend, besonders bevorzugt vollständig, über eine Abstützhalterung 31 mit dem Flächenpflegefahrzeug 1 verbunden bzw. abgestützt sein. Die Abstützhalterung 31 kann beispielsweise direkt auf einer Fahrzeuggrundstruktur (z. B. Fahrwerk, Tragrahmen o. ä.) oder auf der Fahrerkabine 9 befestigt sein und damit hiervon ausgehend eine zumindest abschnittsweise, bevorzugt überwiegende, besonders bevorzugt eine vollständige bzw. ausschließliche, Tragfunktion für die Fördereinrichtung 5, insbesondere die Förder- und Zerkleinerungseinrichtung 14, und/oder den Förderkanal 7 ausführen. Beispielsweise ist zumindest der stromab zu einer Strömungserzeugungseinrichtung verlaufende Kanalabschnitt bzw. die diesen Kanalabschnitt bildenden Wandungselemente zumindest überwiegend, bevorzugt ausschließlich, über die Abstützhalterung 31, insbesondere ausschließlich über die Fahrerkabine 9, an dem Flächenpflegefahrzeug 1, befestigt. Die Abstützhalterung 31 kann zur zumindest teilweisen, bevorzugt zur überwiegenden, besonders bevorzugt zur ausschließlichen, Abstützung der Förder- und/oder Zerkleinerungseinrichtung 5, 13, 14 an einer Grundstruktur des Flächenpflegefahrzeugs 1, insbesondere an einer Fahrerkabine 9 des Flächenpflegefahrzeugs 1, verwendet werden.

Die Auffangeinrichtung 6 kann beispielsweise einen Leitabschnitt 32 umfassen, der sich vom Auffangvolumen bzw. Aufnahmebereich 26 zumindest abschnittsweise in einen Bereich oberhalb bzw. über der Fahrerkabine 9 erstreckt. Der Leitabschnitt 32 kann beispielsweise im Wesentlichen horizontal ausgerichtet sein. Der Aufnahmebereich 26 kann sich mit der Austrittsöffnung bzw. dem Austrittsende 28 des Förderkanals 7 in der Projektion auf die Aufstellfläche 22 des Flächenpflegefahrzeugs 1 überschneiden. Mit anderen Worten kann das Austrittsende 28 des Förderkanals 7 mit dem Aufnahmebereich 26 der Auffangeinrichtung 5 und/oder mit dem Leitabschnitt 32 der Auffangeinrichtung 5 derart zusammenwirken, dass der aus dem Austrittsende 26 des Förderkanals 7 austretende abgetrennte Bewuchs 4 in den Aufnahmebereich 26 gelangt.

Es kann sich als vorteilhaft erweisen, wenn die Schneideinrichtung 5 an dem Flächenpflegefahrzeug 1 vermittels einer Halteeinrichtung 33 befestigt ist. Die Halteeinrichtung 33 kann beispielsweise derart ausgebildet sein, dass vermittels der Halteeinrichtung 33 eine Relativbewegung der Schneideinrichtung 3 und dem Flächenpflegefahrzeug 1 ausgeführt werden kann. Beispielsweise kann vermittels eines Sensorsignals oder eines manuellen Eingriffs über eine Eingabeeinrichtung (nicht dargestellt) die Position und/oder Ausrichtung der Schneideinrichtung 3 relativ zu dem Flächenpflegefahrzeug 1 verändert werden. In einer besonders vorteilhaften Ausführungsform kann es vorgesehen sein, dass über ein Steuerungssignal eines Abstandssensor der Abstand 21 des wenigstens einen Schneidmittels 20 zu der bestehenden oder wiederherzustellenden Grünlandfläche 2 bzw. zu der Aufstellfläche 22 in einem vordefinierten Bereich gehalten wird.

In Figur 1 ist beispielhaft die Anordnung und/oder Ausbildung eines Abstreifers bzw. eines Vorlaufelements 34 dargestellt. Dieses Vorlaufelement 34 ist in bestimmungsgemäßer Bewegungsrichtung (Fahrtrichtung 8) des Flächenpflegefahrzeugs 1 vor der Schneideinrichtung 3 liegend. Durch das Vorlaufelement 34 werden Tiere, insbesondere Kleinlebewesen, welche sich auf der Grünlandfläche befinden, gestört bzw. vertrieben, sodass zumindest der Grad einer etwaigen Beeinträchtigung dieser Tiere durch die Schneideinrichtung 3 und/oder durch das Flächenpflegefahrzeug 1 reduziert wird. Beispielsweise umfasst das Vorlaufelement 34 wenigstens ein Kettenelement, insbesondere einen Kettenvorhang, und/oder wenigstens ein flexibles Element und/oder wenigstens einen Luftstrom, insbesondere einen Luftvorhang, der auf die vor der Schneideinrichtung 3 liegende Oberfläche der Grünfläche einwirkt. Beispielsweise befindet sich der Wirkbereich des Vorlaufelements 34 mindestens 30 cm, bevorzugt mindestens 50 cm, besonders bevorzugt mindestens 75 cm, vor der Schneideinrichtung 34.

### BEZUGSZEICHENLISTE

- 1: Flächenpflegefahrzeug
- 2: Grünlandfläche
- 3: Schneideinrichtung
- 4, 4', 4": Bewuchs
- 5: Fördereinrichtung
- 6: Auffangeinrichtung
- 7: Förderkanal
- 8: Fahrtrichtung
- 9: Fahrerkabine
- 10: Oberkante von 9
- 11: hintere Hälfte von 9
- 12: Förderströmung
- 13: Zerkleinerungseinrichtung
- 14: Förder- und Zerkleinerungseinrichtung
- 15: Raupenkette
- 16: Raupenlaufwerk
- 17: Mittelhochachse
- 18: Mitte von 17
- 19: Fahrzeugfront
- 20: Schneidmittel
- 21: Abstand
- 22: Aufstellfläche
- 23: Fahrzeuglängsachse
- 24: Rotationsachse
- 25: Pfeil zur Rotation von 20
- 26: Aufnahmebereich von 6
- 27: Schwenkachse
- 28: Austrittsende von 7
- 29: Höhe von 1
- 30: Begrenzung vorne von 1
- 31: Abstützhalterung
- 32: Leitabschnitt
- 33: Halteeinrichtung
- 34: Vorlaufelement
- α: Winkel

## Patentansprüche

1. Flächenpflegefahrzeug (1) zur Pflege oder Wiederherstellung einer, insbesondere nährstoffarmen, Grünlandfläche (2), vorzugsweise einer Magerrasenfläche, umfassend
- eine Schneideeinrichtung (3) zum Abtrennen von, insbesondere gehölzartigen, Bewuchs (4) von der bestehenden oder wiederherzustellenden Grünlandfläche (2) und
- eine Fördereinrichtung (5) zum Fördern von durch die Schneideinrichtung (3) von der bestehenden oder wiederherzustellenden Grünlandfläche (2) abgetrennten Bewuchs (4) in eine flächenpflegefahrzeugseitige Auffangeinrichtung (6).

2. Flächenpflegefahrzeug (1) nach Anspruch 1, **gekennzeichnet durch** einen sich zumindest abschnittsweise, bevorzugt überwiegend, besonders bevorzugt vollständig, von der Schneideinrichtung (3) zu der Auffangeinrichtung (6) sich erstreckenden Förderkanal (7) zur Förderung des abgetrennten Bewuchses (4), insbesondere ist der Förderkanal (7) zumindest abschnittsweise, bevorzugt überwiegend, besonders bevorzugt vollständig, als ein zumindest eine geschlossene Wandung aufweisender Rohrkanal ausgebildet.

3. Flächenpflegefahrzeug (1) nach Anspruch 2, **dadurch gekennzeichnet, dass** sich der Förderkanal (7) von einer sich in Fahrtrichtung (8) vor einer Fahrerkabine (9) angeordneten Schneideinrichtung (3) zumindest bis zu einem sich über einer Oberkante (10) der Fahrerkabine (9) und/oder im oberen Bereich der Fahrerkabine (9) liegenden Bereich erstreckt, bevorzugt erstreckt sich der Förderkanal (7) zumindest bis in einen über der Fahrerkabine (9) befindlichen Bereich, besonders bevorzugt erstreckt sich der Förderkanal (7) zumindest bis in einen in Fahrtrichtung (8) des Flächenpflegefahrzeugs (1) gesehenen in der hinteren Hälfte (11) der Fahrerkabine (9) liegenden Bereich.

4. Flächenpflegefahrzeug (1) nach einem der vorhergehenden Ansprüche, **dadurch gekennzeichnet, dass** die Fördereinrichtung (5) als Strömungserzeugungseinrichtung ausgebildet ist oder eine solche umfasst, bevorzugt erzeugt die Strömungserzeugungseinrichtung eine Förderströmung (12), durch welche zumindest abschnittsweise eine Förderung des durch die Schneideinrichtung (3) abgetrennten Bewuchses (4) in die Auffangeinrichtung (6) des Flächenpflegefahrzeugs (1) ausführbar ist.

5. Flächenpflegefahrzeug (1) nach einem der vorhergehenden Ansprüche, **gekennzeichnet durch** eine, insbesondere in oder an dem Förderkanal (7) und, stromab der Schneideinrichtung (3) angeordnete Zerkleinerungseinrichtung (13) zur Zerkleinerung des durch die Schneideinrichtung (3) abgetrennten Bewuchses (4), bevorzugt erfolgt die zerkleinerungseinrichtungsseitige Zerkleinerung bevor der abgetrennte Bewuchs (4) in die Auffangeinrichtung (6) gelangt.

6. Flächenpflegefahrzeug (1) nach einem der vorhergehenden Ansprüche, **dadurch gekennzeichnet, dass** die Fördereinrichtung (5) und die Zerkleinerungseinrichtung (13) in einer Förder- und Zerkleinerungseinrichtung (14) als eine Baueinheit ausgebildet ist, bevorzugt ist die Förder- und Zerkleinerungseinrichtung (14) als Schneid-und/oder Hackturbine ausgebildet.

7. Flächenpflegefahrzeug (1) nach einem der vorhergehenden Ansprüche, **gekennzeichnet durch** ein mit wenigstens einer Raupenkette (15) ausgestattetes Raupenlaufwerk (16), bevorzugt ist die wenigstens eine Raupenkette (15) zumindest teilweise, insbesondere überwiegend, aus einem nichtmetallischen Werkstoff ausgebildet, besonders bevorzugt ist die Raupenkette (15) zumindest teilweise, insbesondere überwiegend, aus Kunststoff und/oder Gummi ausgebildet.

8. Flächenpflegefahrzeug (1) nach einem der vorhergehenden Ansprüche, **dadurch gekennzeichnet, dass** das Flächenpflegefahrzeug (1) einen spezifischen Bodendruck von 0,098 bis 0,260 kg/cm², bevorzugt von 0,113 bis 0,178 kg/cm², besonders bevorzugt von 0,134 bis 0,160 kg/cm², aufweist.

9. Flächenpflegefahrzeug (1) nach einem der vorhergehenden Ansprüche, **dadurch gekennzeichnet, dass** die Schneideinrichtung (3) eingerichtet ist, insbesondere gehölzartigen, Bewuchs (4) von einem maximalen Durchmesser von maximal 16 cm, bevorzugt von maximal 13 cm, besonders bevorzugt von maximal 10 cm, höchst bevorzugt von maximal 8 cm, abzutrennen.

10. Flächenpflegefahrzeug (1) nach einem der vorhergehenden Ansprüche, **dadurch gekennzeichnet, dass** die Schneideinrichtung (3) zumindest ein rotierendes Schneidmittel (20) aufweist, wobei das Schneidmittel (20) um eine im Wesentlichen quer zur Fahrzeuglängsachse (23) verlaufende Rotationsachse (24) rotierbar ist, insbesondere rotiert das Schneidmittel (20) um eine im Wesentlichen parallel zur Aufstellfläche (22) des Flächenpflegefahrzeug (1) verlaufenden Rotationsachse (24).

11. Flächenpflegefahrzeug (1) nach einem der vorhergehenden Ansprüche, **dadurch gekennzeichnet, dass** das Flächenpflegefahrzeug (1) eine Steigfähigkeit von größer 25 %, bevorzugt von größer 30 %, besonders bevorzugt von größer 33 %, höchst bevorzugt von größer 35 %, aufweist.

12. Flächenpflegefahrzeug (1) nach einem der vorhergehenden Ansprüche, **dadurch gekennzeichnet, dass** die Gewichtsverteilung des Flächenpflegefahrzeugs (1) wie folgt aufgeteilt ist:
- Anteil vorderen Drittels des Flächenpflegefahrzeug (1) beträgt 0,3 bis 0,6,
- Anteil des mittleren Drittel des Flächenpflegefahrzeugs (1) beträgt 0,2 bis 0,6,
- Anteil des hinteren Drittels des Flächenpflegefahrzeugs (1) beträgt 0,2 bis 0,5.

13. Flächenpflegefahrzeug (1) nach einem der vorhergehenden Ansprüche, **dadurch gekennzeichnet, dass** die Fördereinrichtung (5) und/oder eine Zerkleinerungseinrichtung (13), insbesondere die Strömungserzeugungseinrichtung, zumindest abschnittsweise, bevorzugt überwiegend, besonders bevorzugt vollständig, oberhalb des zweiten Drittels der Höhe (29) des Flächenpflegefahrzeug (1) angeordnet ist.

14. Flächenpflegefahrzeug (1) nach Anspruch 13, **dadurch gekennzeichnet, dass** die Fördereinrichtung (5) und/oder eine Zerkleinerungseinrichtung (13), insbesondere die Strömungserzeugungseinrichtung, bevorzugt oberhalb des dritten Viertels der Höhe (29) des Flächenpflegefahrzeugs (1), besonders bevorzugt oberhalb der Oberkante (10) der Fahrerkabine (9) des Flächenpflegefahrzeugs (1), angeordnet ist.

15. Verfahren zur Pflege oder Wiederherstellung einer, insbesondere nährstoffarmen, Grünlandfläche (2), vorzugsweise einer Magerrasenfläche, umfassend die folgenden Verfahrensschritte:
- Abtrennen von, insbesondere gehölzartigen, Bewuchs (4) von der bestehenden oder wiederherzustellenden Grünlandfläche (2) vermittels einer Schneideinrichtung (3) eines Flächenpflegefahrzeugs (1), insbesondere eines Flächenpflegefahrzeugs (1) nach einem der vorhergehenden Ansprüche,
- Fördern von durch die Schneideinrichtung (3) von der bestehenden oder wiederherzustellenden Grünlandfläche (2) abgetrennten, insbesondere gehölzartigen, Bewuchs (4) vermittels einer Fördereinrichtung (5) des Flächenpflegefahrzeugs (1) in einen flächenpflegefahrzeugseitigen Aufnahmebereich (26).
